# EUROPÄISCHE PATENTSCHRIFT

(11) **EP 3 097 326 B1**
(45) Veröffentlichungstag und Bekanntmachung des Hinweises auf die Patenterteilung: **29.07.2020**
(21) Anmeldenummer: 14814823.2
(22) Anmeldetag: 15.12.2014
(51) Int. Cl.: F16H 61/02, F16H 61/14

(54) **GETRIEBEVORRICHTUNG MIT EINEM HYDRAULIKSYSTEM**
TRANSMISSION DEVICE WITH A HYDRAULIC SYSTEM
DISPOSITIF DE TRANSMISSION MUNI D'UN SYSTÈME HYDRAULIQUE

(30) Priorität: 22.01.2014 DE 102014201131
(43) Veröffentlichungstag der Anmeldung: 30.11.2016
(73) Patentinhaber: ZF Friedrichshafen AG, 88046 Friedrichshafen (DE)
(72) Erfinder: HERRMANN, Markus, 88175 Scheidegg (DE); SCHMIDT, Thilo, 88074 Meckenbeuren (DE)
(74) Vertreter: ZF Friedrichshafen AG
(86) Internationale Anmeldenummer: PCT/EP2014/077714
(87) Internationale Veröffentlichungsnummer: WO 2015/110222

(56) Entgegenhaltungen:
- DE-A1-102007 000 561
- DE-A1-102011 109 376

## Beschreibung

Die Erdfindung betrifft eine Getriebevorrichtung mit einem Hydrauliksystem gemäß der im Oberbegriff des Patentanspruches 1 näher definierten Art.

Aus der DE 10 2007 000 561 A1 ist eine Getriebevorrichtung mit einem Hydrauliksystem bekannt, das einen Primärdruckkreis und einen Sekundärdruckkreis umfasst. Der Sekundärdruckkreis ist ab einem definierten Sättigungszustand des Primärdruckkreises mit Hydraulikfluid versorgbar. Zusätzlich ist die Getriebevorrichtung mit einem als sogenannter Dreileitungswandler ausgebildeten hydrodynamischen Drehmomentwandler und einer damit korrespondierenden Wandlerüberbrückungskupplung ausgeführt. Die Wandlerüberbrückungskupplung ist über den Primärdruckkreis mit einem im Bereich eines Wandlerkupplungsventils einstellbaren Betätigungsdruck betätigbar. Ein Torusinnenraum des Dreileitungswandlers ist in geöffnetem Betriebszustand der Wandlerüberbrückungskupplung über ein Wandlerschaltventil des Sekundärdruckkreises mit einem im Bereich eines Wandlerdruckventils einstellbaren Wandlerdruck beaufschlagbar. Der Betätigungsdruck der Wandlerüberbrückungskupplung liegt in Schließrichtung und der Wandlerdruck im Torusinnenraum des Dreileitungswandlers liegt in Öffnungsrichtung der Wandlerüberbrückungskupplung wirkend an der Wandlerüberbrückungskupplung an.

Im Regelzustand und im vollständig geschlossenen Betriebszustand der Wandlerüberbrückungskupplung wird der Torusinnenraum des Dreileitungswandlers ausgehend von einem Betätigungsdruck der Wandlerüberbrückungskupplung führenden Bereich des Hydrauliksystems mit Hydraulikfluid beaufschlagt. Dies führt jedoch nachteilhafterweise während ungesättigter Betriebszustände des Primärdruckkreislaufes des Hydrauliksystems dazu, dass vom Primärdruckkreis mit Hydraulikfluid zu versorgende Funktionsgruppen der Getriebevorrichtung, d. h. neben der Wandlerüberbrückungskupplung auch weitere Getriebekomponenten, wie Schaltelemente und dergleichen, und auch eine Kühlung des Dreileitungswandlers im Regelbetriebszustand und im geschlossenen Betriebszustand der Wandlerüberbrückungskupplung unter Umständen nicht im erforderlichen Umfang mit Hydraulikfluid beaufschlagt werden.

Zudem wird eine Betätigungsdynamik der Getriebevorrichtung durch die zusätzliche Versorgung des Dreileitungswandlers über den Primärdruckkreis bei mit Betätigungsdruck beaufschlagter Wandlerüberbrückungskupplung beeinträchtigt. Der in Richtung des Dreileitungswandlers aus dem Primärdruckkreis entnommene Hydraulikfluidvolumenstrom ist durch ein Erhöhen eines beispielsweise über eine Getriebehauptpumpe zur Verfügung gestellten Hydraulikfluidvolumenstroms zwar kompensierbar, jedoch erfolgt die zusätzliche Versorgung des Hydrauliksystems der Getriebevorrichtung über die Getriebehauptpumpe in verzögertem Umfang, was eine gewünscht hohe Dynamik einer Getriebevorrichtung beeinträchtigt.

Der vorliegenden Erfindung liegt daher die Aufgabe zugrunde, eine Getriebevorrichtung mit einem Hydrauliksystem zur Verfügung zu stellen, bei der eine hydraulische Versorgung eines Drehmomentwandlers gewährleistet ist und die mit einer gewünscht hohen Dynamik betreibbar ist.

Erfindungsgemäß wird diese Aufgabe mit einer Getriebevorrichtung gemäß den Merkmalen des Patentanspruches 1 gelöst.

Die erfindungsgemäße Getriebevorrichtung ist mit einem Hydrauliksystem ausgeführt, das einen Primärdruckkreis und einen Sekundärdruckkreis umfasst. Der Sekundärdruckkreis ist ab einem definierten Sättigungszustand des Primärdruckkreises mit Hydraulikfluid versorgbar. Zusätzlich sind ein als Dreileitungswandler ausgebildeter hydrodynamischer Drehmomentwandler und eine damit korrespondierende Wandlerüberbrückungskupplung vorgesehen. Die Wandlerüberbrückungskupplung ist über den Primärdruckkreis mit einem im Bereich eines Wandlerkupplungsventils einstellbaren Betätigungsdruck betätigbar. Ein Torusinnenraum des Dreileitungswandlers ist in geöffnetem Betriebszustand der Wandlerüberbrückungskupplung über ein Wandlerschaltventil des Sekundärdruckkreises mit einem im Bereich eines Wandlerdruckventils einstellbaren Wandlerdruck beaufschlagbar. Der Betätigungsdruck der Wandlerüberbrückungskupplung liegt in Schließrichtung und der Wandlerdruck im Torusinnenraum des Dreileitungswandlers liegt in Öffnungsrichtung der Wandlerüberbrückungskupplung wirkend an der Wandlerüberbrückungskupplung an.

Erfindungsgemäß ist der Torusinnenraum bei über das Wandlerkupplungsventil mit Betätigungsdruck beaufschlagter Wandlerüberbrückungskupplung über das Wandlerschaltventil ebenfalls mit dem im Bereich des Wandlerdruckventils einstellbaren Wandlerdruck vom Sekundärdruckkreis und über eine Ventileinrichtung und eine der Ventileinrichtung nachgeschaltete Drosseleinrichtung vom Primärdruckkreis mit Hydraulikfluid versorgbar.

Dadurch, dass der Dreileitungswandler der erfindungsgemäßen Getriebevorrichtung sowohl im unbetätigten Betriebszustand als auch im betätigten Betriebszustand der Wandlerüberbrückungskupplung oberhalb eines definierten Sättigungszustandes des Primärdruckkreises vom Sekundärdruckkreis ausgehend mit Hydraulikfluid beaufschlagt wird, ist die erfindungsgemäße Getriebevorrichtung mit einer gewünscht hohen Dynamik betreibbar. Dies resultiert aus der Tatsache, dass bei einer erhöhten Anforderung seitens einer oder mehrerer über den Primärdruckkreis mit Hydraulikfluid zu versorgender Getriebekomponenten, die zumindest eine kurzfristige Unterversorgung des Primärdruckkreises verursacht, der zuvor in Richtung des Sekundärdruckkreises geführte Hydraulikfluidvolumenstrom für die zusätzliche Versorgung solcher Getriebekomponenten über den Primärdruckkreis sofort und ohne entsprechende Betätigung einer Getriebehauptpumpe oder einer anderen Druckquelle der Getriebevorrichtung aktuell und daher im Wesentlichen verzögerungsfrei zusätzlich zur Verfügung stellbar ist. Um Unterversorgungszustände im Bereich des Dreileitungswandlers bei Vorliegen eines solchen Betriebszustandsverlaufes zu vermeiden, ist der Dreileitungswandler über die Ventileinrichtung und die der Ventileinrichtung nachgeschaltete Drosseleinrichtung vom Primärdruckkreis mit einem im Vergleich zu aus dem Stand der Technik ausgehend vom Primärdruckkreis in Richtung des Dreileitungswandlers geführten Hydraulikfluidvolumenstroms reduzierten Hydraulikfluidvolumenstrom versorgbar, mittels dem Leckagevolumenströme im Bereich des Torusinnenraums und der Peripherie des Drehmomentwandlers ausgleichbar sind und somit Luftansammlungen in den letztgenannten Bereichen des Hydrauliksystems vermieden werden.

Bei einer vorteilhaften Ausführungsform der erfindungsgemäßen Getriebevorrichtung ist das Wandlerdruckventil in einer ersten Schaltstellung des Wandlerschaltventils, die das Wandlerschaltventil in geöffnetem Betriebszustand der Wandlerüberbrückungskupplung aufweist, über den Torusinnenraum des Dreileitungswandlers mit einem Getriebekühler und mit einer Getriebeschmierung verbunden, wobei ausgangsseitig des Torusinnenraums des Dreileitungswandlers zwischen dem Torusinnenraum und dem Getriebekühler und der Getriebeschmierung eine Rückschlagventileinrichtung vorgesehen ist. Damit ist gewährleistet, dass der Torusinnenraum des Dreileitungswandlers bei geöffneter Wandlerüberbrückungskupplung mit einem für eine ausreichende Kühlung des dann Drehmoment übertragenden Dreileitungswandlers ausgehend vom Sekundärdruckkreis in Richtung des Getriebekühlers und der Getriebeschmierung durchströmt wird. Zusätzlich verhindert diese Ausführung während nicht gesättigter Betriebszustände des Primärdruckkreises, zu welchen der Sekundärdruckkreis nicht mit Hydraulikfluidvolumen versorgt wird, dass sich der Torusinnenraum des Dreileitungswandlers in Richtung des Getriebekühlers und der Getriebeschmierung bei länger anhaltenden Unterversorgungsbetriebszuständen des Primärdruckkreises und somit auch des Sekundärdruckkreises entleert und unerwünschte Luftansammlungen im Bereich des Torusinnenraums entstehen. Dabei wird die Entleerung auf einfache Art und Weise über die Rückschlagventileinrichtung vermieden.

In einer zweiten Schaltstellung des Wandlerschaltventils, die das Wandlerschaltventil bei mit Betätigungsdruck beaufschlagter Wandlerüberbrückungskupplung aufweist, ist das Wandlerdruckventil bei einer weiteren vorteilhaften Ausführungsform der erfindungsgemäßen Getriebevorrichtung über das Wandlerschaltventil sowohl mit dem Getriebekühler und der Getriebeschmierung als auch mit einem Eingang des Torusinnenraums des Dreileitungswandlers verbunden, wobei der Torusinnenraum ausgangsseitig über das Wandlerschaltventil und die Rückschlagventileinrichtung mit einem im Wesentlichen drucklosen Bereich in Verbindung steht.

Dadurch wird wiederum erreicht, dass ein in den Sekundärdruckkreis eingeleiteter Hydraulikfluidvolumenstrom in betätigtem Betriebszustand der Wandlerüberbrückungskupplung, zu dem die Wandlerüberbrückungskupplung entweder vollständig geschlossen ist oder deren Übertragungsfähigkeit durch Anlegen eines definierten Betätigungsdruckes in Abhängigkeit einer entsprechenden Anforderung über einen Schlupfbetrieb variiert wird, zu einem Teil für eine gewünschte Kühlung des Dreileitungswandlers durch den Torusinnenraum des Dreileitungswandlers verwendet wird und zum anderen Teil am Torusinnenraum vorbei direkt in Richtung des Getriebekühlers und der Getriebeschmierung eingeleitet wird.

Da der Torusinnenraum ausgangsseitig über das Wandlerschaltventil und die Rückschlagventileinrichtung mit dem im Wesentlichen drucklosen Bereich in Verbindung steht, wird im Torusinnenraum ein für eine gute Regelbarkeit der Übertragungsfähigkeit der Wandlerüberbrückungskupplung erforderlicher konstanter Hydraulikdruck eingestellt. Der konstante Hydraulikdruck im Torusinnenraum wird wiederum während Unterversorgungsbetriebszuständen der Getriebevorrichtung, während denen der Primärdruckkreis in ungesättigtem Betriebszustand vorliegt und der Sekundärdruckkreis nicht mit Hydraulikfluidvolumen beaufschlagt wird, ausgehend vom Primärdruckkreis über die Ventileinrichtung und die der Ventileinrichtung nachgeschaltete Drosseleinrichtung eingestellt.

Weist die Rückschlagventileinrichtung ein zwischen dem Ausgang des Torusinnenraums und dem Wandlerschaltventil angeordnetes Rückschlagventil auf, dessen Ansprechgrenze variierbar ist, ist über ein einziges Rückschlagventil sowohl die für die Entleerungsverhinderung des Dreileitungswandlers bei geöffneter Wandlerüberbrückungskupplung und die zur Darstellung des konstanten Hydraulikdruckes im Torusinnenraum bei betätigter Wandlerüberbrückungskupplung erforderliche Funktion darstellbar.

Bei einer hierzu alternativen Ausführungsform der erfindungsgemäßen Getriebevorrichtung weist die Rückschlagventileinrichtung ein zwischen dem Ausgang des Torusinnenraums und dem Wandlerschaltventil angeordnetes Rückschlagventil und ein zwischen dem Wandlerschaltventil und dem drucklosen Bereich vorgesehenes weiteres Rückschlagventil auf, wobei eine Ansprechgrenze des Rückschlagventils kleiner ist als die Ansprechgrenze des weiteren Rückschlagventils und die Entleerungsverhinderung über das weitere Rückschlagventil zur Verfügung gestellt wird, während das konstante Druckniveau im Torusinnenraum bei betätigter Wandlerüberbrückungskupplung über das Rückschlagventil gewährleistet wird.

Ist die Rückschlagventileinrichtung stromab des Torusinnenraums und zwischen dem Wandlerschaltventil und dem Getriebekühler und der Getriebeschmierung mit einem Rückschlagventil und zwischen dem Wandlerschaltventil und dem drucklosen Bereich mit einem weiteren Rückschlagventil ausgeführt, wobei eine Ansprechgrenze des Rückschlagventils kleiner ist als die Ansprechgrenze des weiteren Rückschlagventils, ist die Darstellung des konstanten Druckniveaus im Torusinnenraum des Dreileitungswandlers bei betätigter Wandlerüberbrückungskupplung in geringerem Umfang von Fertigungstoleranzen im Bereich der Rückschlagventileinrichtung beeinflusst als bei der letztbeschriebenen Ausführungsform der Getriebevorrichtung. Dies resultiert aus der Tatsache, dass der aus dem Torusinnenraum abströmende Hydraulikfluidvolumenstrom bei betätigter Wandlerüberbrückungskupplung lediglich über das Wandlerschaltventil und das zwischen dem Wandlerschaltventil und dem drucklosen Bereich vorgesehene weitere Rückschlagventil zur Einstellung des gewünscht konstanten Druckniveaus im Torusinnenraum zu führen ist.

Sind das Wandlerkupplungsventil und das Wandlerschaltventil über eine Aktoreinrichtung mit einem Vorsteuerdruck beaufschlagbar, ist die erfindungsgemäße Getriebevorrichtung mit geringem Aufwand betreibbar, da die jeweils in Abhängigkeit des aktuell vorliegenden Betriebszustandes der Wandlerüberbrückungskupplung vorgesehene Umschaltung des Wandlerschaltventils auf einfache Art und Weise in Abhängigkeit des von der Aktoreinrichtung zur Verfügung gestellten Vorsteuerdruckes auslösbar bzw. umsetzbar ist.

Bei einer weiteren vorteilhaften Ausführungsform der erfindungsgemäßen Getriebevorrichtung ist zwischen dem Wandlerkupplungsventil und der Wandlerüberbrückungskupplung eine Ventileinrichtung vorgesehen, mittels der die Verbindung zwischen dem Wandlerkupplungsventil und der Wandlerüberbrückungskupplung sperrbar ist. Damit besteht auf einfache Art und Weise die Möglichkeit, den an der Wandlerüberbrückungskupplung anliegenden Betätigungsdruck ohne weiteren Energieaufwand durch entsprechende Betätigung der Ventileinrichtung und ein damit einhergehendes Sperren der Verbindung zwischen dem Wandlerkupplungsventil und der Wandlerüberbrückungskupplung aufrecht zu erhalten und in dem in Bezug auf die Wandlerüberbrückungskupplung stromauf der Ventileinrichtung vorhandenen Bereich des Hydrauliksystems energetisch günstig mit dem gewünschten Druckniveau zu beaufschlagen. Damit sind die bei herkömmlichen Hydrauliksystemen jeweils zum Aufrechterhalten eines Betätigungsdruckes einer Wandlerüberbrückungskupplung entstehenden Verlustleistungen, die beispielsweise durch einen hierfür erforderlichen Förderbetrieb einer Getriebehauptpumpe auftreten, auf konstruktiv einfache Art und Weise vermeidbar, wenn der Bereich zwischen der Ventileinrichtung und der Wandlerüberbrückungskupplung entsprechend druckdicht ausgeführt ist.

Bei einer konstruktiv einfachen und durch einen geringen Bauraumbedarf gekennzeichneten Weiterbildung der erfindungsgemäßen Getriebevorrichtung ist an einem Ventilschieber der Ventileinrichtung ein Drucksignal anlegbar, das die Ventileinrichtung in einen die Verbindung zwischen Wandlerkupplungsventil und Kolbenraum der Wandlerüberbrückungskupplung trennenden oder die Verbindung freigebenden Betriebszustand hält oder überführt.

Ist an dem Ventilschieber der Ventileinrichtung sowohl der im Bereich zwischen dem Wandlerkupplungsventil und der der Ventileinrichtung vorliegende und über das Wandlerkupplungsventil einstellbare Hydraulikdruck als auch der im Bereich zwischen der Ventileinrichtung und der Wandlerüberbrückungskupplung vorliegende Hydraulikdruck jeweils in einer die Verbindung zwischen dem Wandlerkupplungsventil und der Wandlerüberbrückungskupplung trennende oder die Verbindung freigebende Richtung anlegbar, ist die erfindungsgemäße Getriebevorrichtung mit geringem Steuer- und Regelaufwand betreibbar.

Sowohl die in den Patentansprüchen angegebenen Merkmale als auch die in den nachfolgenden Ausführungsbeispielen der erfindungsgemäßen Getriebevorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Getriebevorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigen:
- Fig. 1: einen Teil eines Hydraulikschemas eines Hydrauliksystems einer ersten Ausführungsform der erfindungsgemäßen Getriebevorrichtung bei unbetätigter Wandlerüberbrückungskupplung;
- Fig. 2: eine Fig. 1 entsprechende Darstellung der Getriebevorrichtung bei betätigter Wandlerüberbrückungskupplung;
- Fig. 3: ein Hydraulikschema eines Hydrauliksystems einer zweiten Ausführungsform der erfindungsgemäßen Getriebevorrichtung; und
- Fig. 4: mehrere Verläufe verschiedener Betriebszustandsparameter der Getriebevorrichtung gemäß Fig. 1 bzw. gemäß Fig. 3 über der Zeit t.

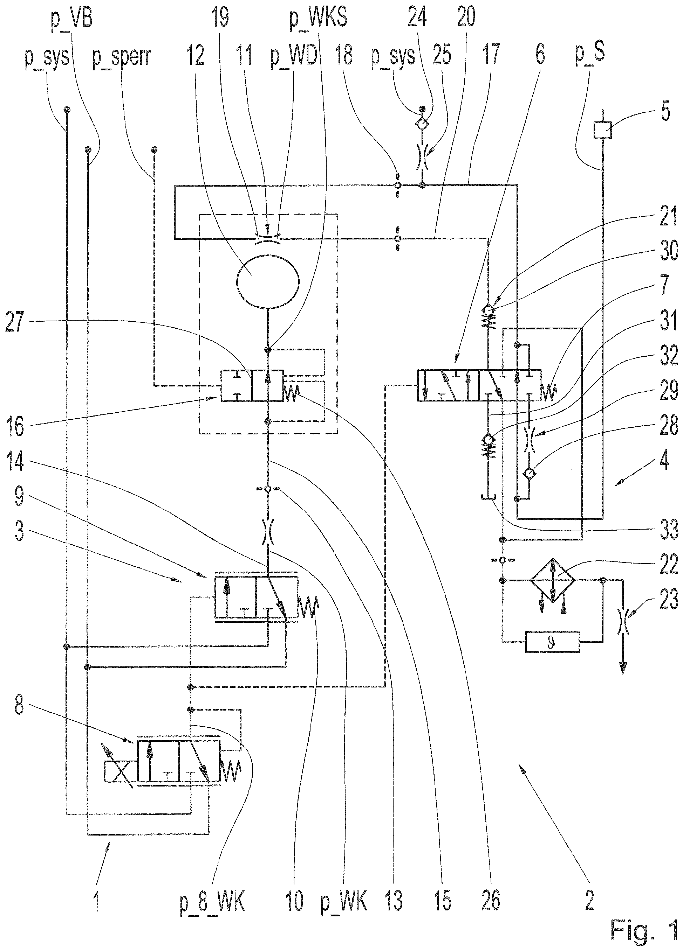

Fig. 1 zeigt einen Teil eines Hydraulikschemas eines Hydrauliksystems 1 einer Getriebevorrichtung 2, wobei das Hydrauliksystem 1 mit einem Primärdruckkreis 3 und mit einem Sekundärdruckkreis 4 ausgeführt ist. Der Sekundärdruckkreis 4 ist ab einem definierten Sättigungszustand des Primärdruckkreises 3 mit Hydraulikfluid versorgbar. Ein Druck p_sys des Primärdruckkreises 3 wird im Bereich eines nicht näher dargestellten Systemdruckventils eingestellt. Der Systemdruck p_sys ist über einen Druckregler an den jeweils vorliegenden Betriebszustand der Getriebevorrichtung 2 und eines damit ausgeführten Fahrzeugantriebsstranges in gewünschtem Umfang anpassbar.

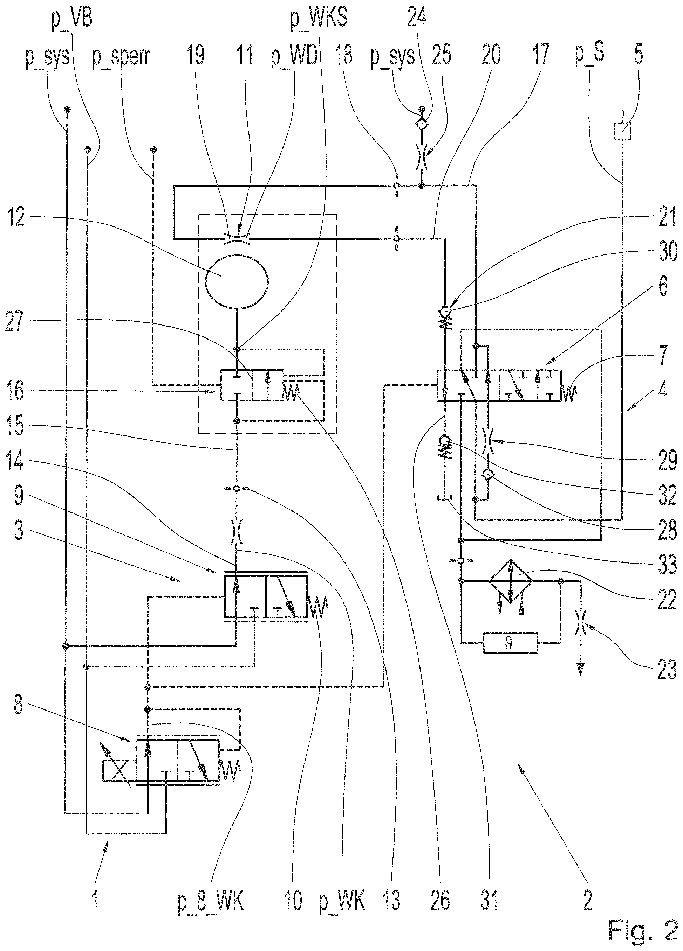

Bei entsprechender Sättigung des Primärdruckkreises 3 wird auch in Richtung des Sekundärdruckkreises 4 Hydraulikfluidvolumen von einer Getriebehauptpumpe über das Systemdruckventil weitergeleitet. Im Bereich eines Wandlerdruckventils 5 wird ein sogenannter Schmierdruck p_S eingestellt, der an einem Wandlerschaltventil 6 anliegt. Das Wandlerschaltventil 6 ist entgegen einer am Wandlerschaltventil 6 angreifenden Federkraft einer Federeinrichtung 7 von einem im Bereich eines elektrohydraulischen Druckreglers 8 einstellbaren Drucksignal p_8_WK aus einer in Fig. 1 gezeigten Schaltstellung in eine in Fig. 2 näher dargestellte zweite Schaltstellung überführbar.

Das Drucksignal p_8_WK liegt auch an einem Wandlerkupplungsventil 9 an und wirkt einer Federkraft einer Federeinrichtung 10 des Wandlerkupplungsventils 9 entgegen. Das Drucksignal p_8_WK hängt vom Systemdruck p_sys ab, der am elektrohydraulischen Druckregler 8 anliegt. Zusätzlich wird der Systemdruck p_sys auch in Richtung des Wandlerkupplungsventils 9 geführt, in dessen Bereich in Abhängigkeit des Drucksignals p_8_WK ein Betätigungsdruck p_WK zum Betätigen einer einem als Dreileitungswandler ausgeführten hydrodynamischen Drehmomentwandler 11 zugeordneten Wandlerüberbrückungskupplung 12 einstellbar ist.

Stromab des Wandlerkupplungsventils 9 ist eine vorliegend lediglich schematisiert dargestellte Drehölzuführung 13 vorgesehen, in deren Bereich das über das Wandlerkupplungsventil 9 in Richtung der Wandlerüberbrückungskupplung 12 geführte Hydraulikfluidvolumen aus einem gehäuseseitigen Ölführkanal 14 in einen im Bereich eines rotierenden Bauteils der Getriebevorrichtung 2 vorgesehenen weiteren Ölführkanal 15 eingeleitet wird. Wiederum stromab der Drehölzuführung 13 ist im weiteren Ölführkanal 15 eine Ventileinrichtung 16 vorgesehen, in deren Bereich die Verbindung zwischen dem Wandlerkupplungsventil 9 und einem Kolbenraum der Wandlerüberbrückungskupplung 12 trennbar oder herstellbar ist. Dabei ist die Verbindung zwischen dem Wandlerkupplungsventil 9 und der Wandlerüberbrückungskupplung 12 in der in Fig. 1 gezeigten Stellung der Ventileinrichtung 16 im Bereich der Ventileinrichtung 16 freigegeben, während die Wandlerüberbrückungskupplung 12 in dem in Fig. 2 dargestellten Betriebszustand der Ventileinrichtung 16 vom Wandlerkupplungsventil 9 getrennt ist.

Zusätzlich zum Systemdruck p_sys liegt am Wandlerkupplungsventil 9 und auch am elektrohydraulischen Druckregler 8 ein Vorbefülldruck p_VB an, über den im Bereich des Primärdruckkreises 3 ein Vorbefülldruckniveau aufrechterhalten wird, über das unerwünschte Luftansammlungen in aktuell vom Systemdruck p_sys nicht beaufschlagten Bereichen des Primärdruckkreises 3 mit geringem Aufwand verhindert werden. Über die Beaufschlagung des Wandlerkupplungsventils 9 und damit der Wandlerüberbrückungskupplung 12 mit dem Vorbefülldruck p_VB wird auf einfache Art und Weise verhindert, dass in diesem Bereich vorhandenes Hydraulikfluidvolumen aufgrund der an der Flüssigkeitssäule angreifenden Schwerkraft mit zunehmender Betriebszeit ausfließt und sich in diesem Bereich unerwünschte Lufteinschlüsse bilden, die eine spätere Inbetriebnahme bzw. Betätigung der Wandlerüberbrückungskupplung 12 verzögern und die Funktionsweise der Wandlerüberbrückungskupplung beeinträchtigen.

In dem in Fig. 1 dargestellten Betriebszustand des Hydrauliksystems 1 ist die Wandlerüberbrückungskupplung 12 im Wesentlichen vollständig geöffnet, womit ein im Fahrzeugantriebsstrang zwischen einer Antriebsmaschine und einem Abtrieb zu übertragendes Drehmoment im Wesentlichen vollständig über den hydrodynamischen Drehmomentwandler 11 geleitet wird. Um den hydrodynamischen Drehmomentwandler 11 in einem hierfür erforderlichen Betriebszustand halten zu können und während der hydrodynamischen Weiterleitung des anliegenden Drehmomentes auftretende Wärmeverlustleitungen aus dem Drehmomentwandler 11 abführen zu können, wird der hydrodynamische Drehmomentwandler 11 stromab des Wandlerschaltventils 6 ausgehend vom Sekundärdruckkreis 4 über eine Leitung 17 mit Hydraulikfluidvolumen versorgt, wenn der Primärdruckkreis 3 einen entsprechenden Sättigungszustand aufweist. Dabei wird das über die Leitung 17 zugeführte Hydraulikfluidvolumen wiederum über eine Drehölzuführung 18 und über einen Zulauf des Drehmomentwandlers 11 in einen Torusinnenraum 19 des hydrodynamischen Drehmomentwandlers 11 eingeleitet und durchströmt diesen. Anschließend tritt das Hydraulikfluidvolumen wieder über einen Ablauf des Drehmomentwandlers 11 aus dem Torusinnenraum 19 des Drehmomentwandlers 11 aus und wird über die Drehölzuführung 18 in eine weitere Leitung 20 eingeleitet, die wiederum zum Wandlerschaltventil 6 zurückführt. Zwischen der Drehölzuführung 18 und dem Wandlerschaltventil 6 ist eine Rückschlagventileinrichtung 21 vorgesehen, deren Ansprechgrenze vorliegend bei etwa 0,1 bar liegt, um ein unerwünschtes Leerlaufen des hydrodynamischen Drehmomentwandlers 11 in unversorgtem Betriebszustand zu verhindern. In der in Fig. 1 gezeigten ersten Schaltstellung des Wandlerschaltventils 6 strömt das aus dem Torusinnenraum 19 abgeleitete Hydraulikfluidvolumen in Richtung eines Getriebekühlers 22 und einer seriell dazu angeordneten und dem Getriebekühler 22 folgenden Getriebeschmierung 23.

Zusätzlich zu der Versorgung des Drehmomentwandlers 11 ausgehend vom Sekundärdruckkreis 4 ist es vorgesehen, dass der Drehmomentwandler 11 bei Vorliegen definierter Unterversorgungsbetriebszustände seitens des Systemdruck p_sys führenden Primärdruckkreises 3 über eine vorliegend als Rückschlagventil ausgeführte Ventileinrichtung 24 und eine nachgeschaltete Drosseleinrichtung 25 mit Hydraulikfluidvolumen beaufschlagbar ist.

Damit ist gewährleistet, dass in nicht gesättigten Betriebszuständen des Primärdruckkreises 3, zu denen der Sekundärdruckkreis 4 über das Systemdruckventil nicht mit Hydraulikfluidvolumen versorgt wird, Hydraulikfluidvolumen aus dem Primärdruckkreis 3 über die Ventileinrichtung 24 und die Drosseleinrichtung 25 in Richtung des Torusinnenraums 19 über die Drehölzuführung 18 geführt wird. Dann wird der Drehmomentwandler 11 ohne entsprechende Versorgung des Drehmomentwandlers 11 ausgehend von Sekundärdruckkreis 4 zum Ausgleich von im Bereich der Drehölzuführung 18 auftretenden und auch im Bereich des Drehmomentwandlers 11 selbst vorliegenden Leckageölvolumenströmen über den Primärdruckkreis 3 mit einer im Vergleich zu aus dem Stand der Technik bekannten Getriebevorrichtungen wesentlich geringeren Getriebeölmenge versorgt und ein für die Funktionsweise des Drehmomentwandlers 11 erforderlicher Betriebszustand des Drehmomentwandlers 11 mit geringem Aufwand aufrechterhalten.

Bei Vorliegen einer Anforderung zum Anheben der Übertragungsfähigkeit der Wandlerüberbrückungskupplung 12 wird im Bereich des Druckreglers 8 ein mit der angeforderten Übertragungsfähigkeit der Wandlerüberbrückungskupplung 12 korrespondierendes Drucksignal p_8_WK ausgegeben, um das Wandlerkupplungsventil 9 in den in Fig. 2 gezeigten Betriebszustand zu überführen, zu dem der anliegende Systemdruck p_sys in Richtung der Ventileinrichtung 16 in entsprechend angefordertem Umfang als Betätigungsdruck p_WK weitergeleitet wird. Der Betätigungsdruck p_WK, der stromauf der Ventileinrichtung 16 an dieser anliegt, liegt gleichwirkend zu einer Federkraft einer Federeinrichtung 26 an einem Ventilschieber 27 der Ventileinrichtung 16 an. Zusätzlich liegt auch der stromab der Ventileinrichtung 16 vorliegende Betätigungsdruck p_WKS gleichwirkend zum Betätigungsdruck p_WK und zur Federkraft der Federeinrichtung 26 am Ventilschieber 27 an, womit die Ventileinrichtung 16 bei über das Wandlerkupplungsventil 9 eingestelltem Betätigungsdruck p_WK in den in Fig. 1 dargestellten Betriebszustand überführt wird und die Übertragungsfähigkeit der Wandlerüberbrückungskupplung 12 im angeforderten Umfang einstellbar ist.

Da der jeweils im Torusinnenraum 19 wirkende Druck p_WD an einem Kolbenelement der Wandlerüberbrückungskupplung 12 in Öffnungsrichtung angreift und damit dem Betätigungsdruck p_WKS der Wandlerüberbrückungskupplung 12 entgegenwirkt, sind für eine gute Regelbarkeit der Wandlerüberbrückungskupplung 12 im Wesentlichen annähernd konstante Druckverhältnisse im Torusinnenraum 19 des hydrodynamischen Drehmomentwandlers 11 gewünscht. Dies ist in der ersten Schaltstellung des Wandlerschaltventils 6 in einem für eine gute Regelbarkeit der Wandlerüberbrückungskupplung 12 erforderlichen Umfang durch die unter Umständen wechselnde Versorgung über den Sekundärdruckkreis 4 und den Primärdrucckreis 3 nicht generell gewährleistet. Deshalb wird das Wandlerschaltventil 6 vom Drucksignal p_8_WK oberhalb eines definierten Druckwertes und bereits bevor die Wandlerüberbrückungskupplung 12 geregelt betrieben wird von der ersten Schaltstellung in die in Fig. 2 dargestellte zweite Schaltstellung umgeschaltet.

In der zweiten Schaltstellung des Wandlerschaltventils 6 wird der Drehmomentwandler 11 bzw. dessen Torusinnenraum 19 oberhalb eines definierten Druckniveaus des Schmierdruckes p_S, das größer als eine Ansprechgrenze einer Rückschlagventileinrichtung 28 ist, ausgehend vom Sekundärdruckkreis 4 mit Hydraulikfluidvolumen beaufschlagt. Das vom Wandlerdruckventil 5 eingespeiste Hydraulikfluidvolumen wird dann zum Teil über die Rückschlagventileinrichtung 28, über eine stromab der Rückschlagventileinrichtung 28 vorgesehene Drosseleinrichtung 29 und das Wandlerschaltventil 6 in die Leitung 17 eingeleitet. Zusätzlich wird das über das Wandlerdruckventil 5 geführte Hydraulikfluidvolumen zum anderen Teil parallel zur Rückschlagventileinrichtung 28 und der Drosseleinrichtung 29 am Drehmomentwandler 11 vorbei über das Wandlerschaltventil 6 in Richtung des Getriebekühlers 22 und der Getriebeschmierung 23 weitergeleitet.

Stromab des Torusinnenraums 19 des Drehmomentwandlers 11 ist die weitere Leitung 20 mit der Rückschlagventileinrichtung 21, die stromauf der Schaltventileinrichtung 6 ein sogenanntes Wandlerrückhalteventil 30 umfasst, über das Wandlerschaltventil 6 mit einer zusätzlichen Leitung 31 verbunden, die wiederum stromab des Wandlerschaltventils 6 mit einem weiteren Rückschlagventil 32 bzw. mit einem Wandlerfußpunktventil der Rückschlagventileinrichtung 21 ausgeführt ist. Das Wandlerfußpunktventil 32 ist vorliegend zwischen dem Wandlerschaltventil 6 und einem drucklosen Bereich 33 angeordnet und weist eine Ansprechgrenze von etwa 1 bar auf, um im Bereich des Torusinnenraums 19 die für eine gute Regelbarkeit der Wandlerüberbrückungskupplung 12 erforderlichen konstanten Druckverhältnisse unabhängig von einer Versorgung des Drehmomentwandlers 11 ausgehend vom Sekundärdruckkreis 4 oder von einer Versorgung ausgehend vom Primärdruckkreis 3 über die Ventileinrichtung 24 und die Drosseleinrichtung 25 mit geringem Steuer- und Regelaufwand darstellen zu können.

In im Wesentlichen geschlossenem Betriebszustand der Wandlerüberbrückungskupplung 12 besteht die Möglichkeit, den stromab der Ventileinrichtung 16 vorliegenden Betätigungsdruck p_WKS der Wandlerüberbrückungskupplung 12 ohne stromauf der Ventileinrichtung 16 entsprechend vorliegenden Betätigungsdruck p_WK über die Ventileinrichtung 16 in dem in Fig. 2 dargestellten Betriebszustand aufrecht zu halten. Hierfür ist am Ventilschieber 27 der Ventileinrichtung 16 ein der Federkraft der Federeinrichtung 26 sowie dem Betätigungsdruck p_WKS und dem Betätigungsdruck p_WK entgegenwirkender Sperrdruck p_sperr anlegbar, um den Ventilschieber 27 in die in Fig. 2 dargestellte Schaltstellung zu überführen. Hierfür ist das Hydrauliksystem 1 im Bereich zwischen der Ventileinrichtung 16 und der Wandlerüberbrückungskupplung 12 sowie im Bereich der Ventileinrichtung 16 und auch im Bereich der Wandlerüberbrückungskupplung 12 entsprechend druckdicht ausgeführt und in diesem Bereich vorliegende Leckagevolumenströme sind derart klein, dass der Druck p_WKS im Wesentlichen in sperrendem Betriebszustand der Ventileinrichtung 16 wenigstens annähernd konstant aufrechterhalten wird. In sperrendem Betriebszustand der Ventileinrichtung 16 besteht somit die Möglichkeit, den Betätigungsdruck p_WK stromauf der Ventileinrichtung 16 entsprechend auf das Vorbefülldruckniveau p_VB abzusenken und die Wandlerüberbrückungskupplung 12 ohne Verlustleistungen erzeugenden Energieaufwand in geschlossenem Betriebszustand zu halten und damit die Getriebevorrichtung 2 mit einem gewünscht hohen Gesamtwirkungsgrad betreiben zu können.

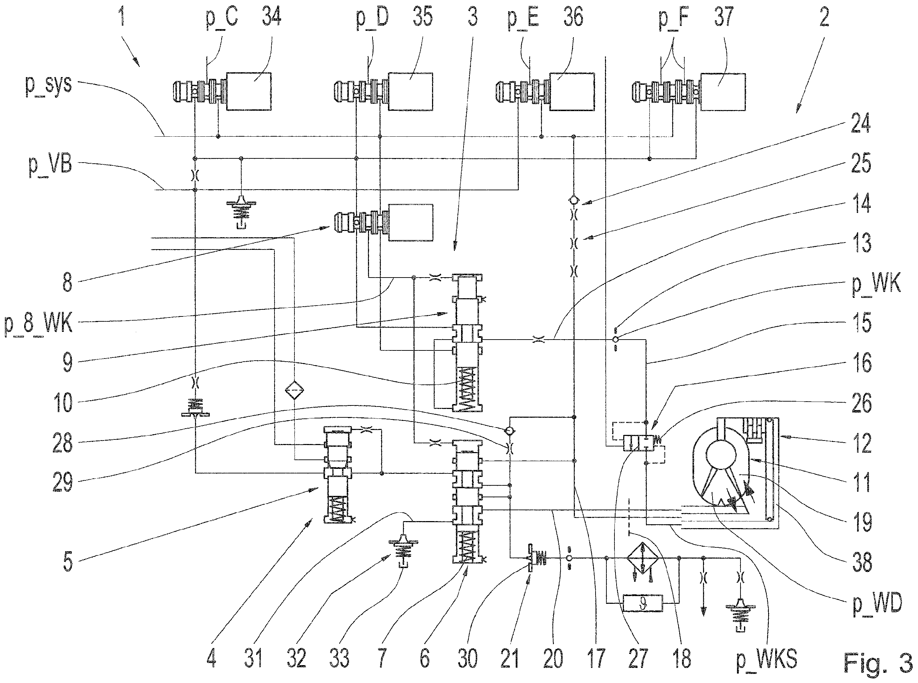

Fig. 3 zeigt eine im Wesentlichen Fig. 1 und Fig. 2 entsprechende Darstellung einer zweiten Ausführungsform des Hydrauliksystems 1 einer Getriebevorrichtung 2, der prinzipiell dieselbe Funktionalität wie dem Hydrauliksystem 1 gemäß Fig. 1 und Fig. 2 zugrunde liegt und die sich im Wesentlichen im Bereich der Ventileinrichtung 16 und im Bereich des Wandlerrückhalteventils 30 vom Hydrauliksystem 1 gemäß Fig. 1 und Fig. 2 unterscheidet. Aus diesen Gründen wird in der nachfolgenden Beschreibung im Wesentlichen lediglich auf die Unterschiede zwischen den beiden Hydrauliksystemen 1 näher eingegangen und bezüglich der weiteren Funktionsweise des Hydrauliksystems 1 gemäß Fig. 3 auf die Beschreibung zu Fig. 1 und Fig. 2 verwiesen. Der in Fig. 3 dargestellte Teil des Hydrauliksystems 1 zeigt neben den zu Fig. 1 und Fig. 2 näher beschriebenen Komponenten weitere Druckregler 34 bis 37, an welchen wie am Druckregler 8 der Systemdruck p_sys anliegt und in deren Bereich jeweils Betätigungsdrücke p_C, p_D, p_E, p_F für Schaltelemente der Getriebevorrichtung 2 einstellbar sind, um diese in einem zur Darstellung verschiedener Übersetzungen im Bereich der Getriebevorrichtung 2 entsprechenden Umfang betätigen zu können.

Bei der Ausführung des Hydrauliksystems 1 gemäß Fig. 3 liegt der stromauf der Ventileinrichtung 16 wirkende Betätigungsdruck p_WK gleichwirkend zum Sperrdruck p_sperr und zu der Federkraft der Federeinrichtung 26 und dem stromab der Ventileinrichtung 16 jeweils vorliegenden Betätigungsdruck p_WKS entgegenwirkend am Ventilschieber 27 der Ventileinrichtung 16 an. Dabei ist ein Flächenverhältnis der Steuerflächen des Ventilschiebers 27, an denen jeweils die Betätigungsdrücke p_WK und p_WKS anliegen, gleich 1. Der am Ventilschieber 27 anliegende Sperrdruck p_sperr wird im Unterschied hierzu im Bereich der Ventileinrichtung 16 mit einer Übersetzung von 2:1 übersetzt, womit beispielsweise bei einem Druckwert von 12 bar des Drucks p_WKS stromab der Ventileinrichtung 16 die Ventileinrichtung 16 mit einem Sperrdruck p_sperr bis etwa 7 bar in einen die Verbindung zwischen dem Wandlerkupplungsventil 9 und der Wandlerüberbrückungskupplung 12 freigebenden Betriebszustand überführbar ist.

Die Ventileinrichtung 16 des Hydrauliksystems 1 gemäß Fig. 3 ist somit im Unterschied zu der Ventileinrichtung 16 gemäß Fig. 1 und Fig. 2 ohne entsprechend anliegenden Sperrdruck p_sperr in dem die Verbindung zwischen dem Wandlerkupplungsventil 9 und der Wandlerüberbrückungskupplung 12 trennenden Betriebszustand von der Federeinrichtung 10 gehalten und stellt somit ein sogenanntes normally-closed-Ventil dar, über das mit geringem Aufwand ein geführtes Entlüften der Wandlerüberbrückungskupplung 12 und ein damit einhergehendes geführtes Reduzieren der Übertragungsfähigkeit der Wandlerüberbrückungskupplung 12 mit geringem Aufwand realisierbar ist.

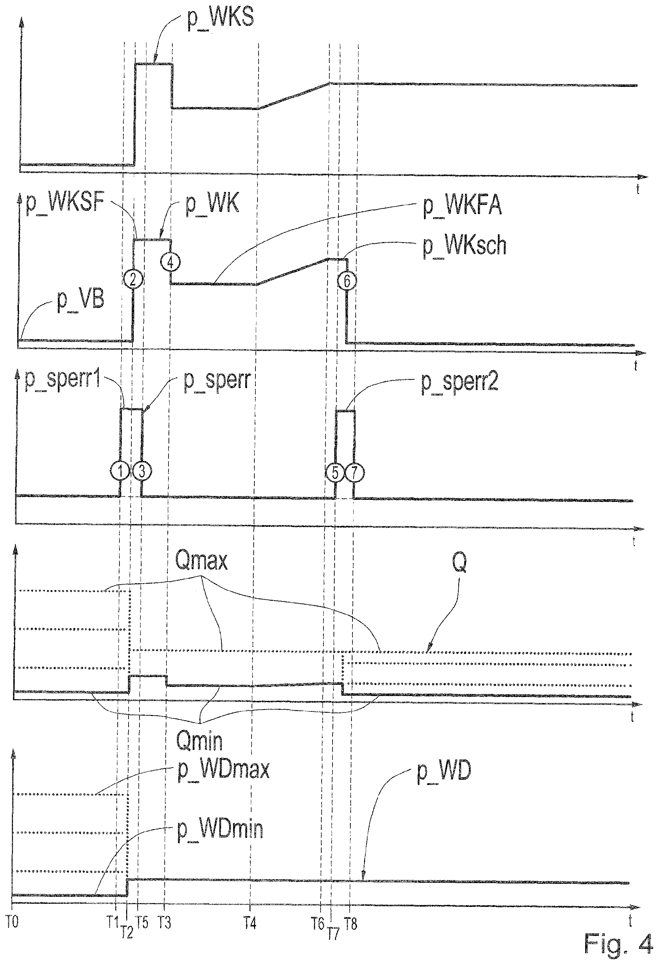

In Fig. 4 sind mehrere Verläufe verschiedener Betriebszustandsparameter des Hydrauliksystems 1 gemäß Fig. 1 und Fig. 2 sowie gemäß Fig. 3 gezeigt, die sich während eines Betriebszustandsverlaufes des Hydrauliksystems 1 ausgehend von einem vollständig geöffneten Betriebszustand bis hin zu einem vollständig geschlossenen Betriebszustand der Wandlerüberbrückungskupplung 12 über der Zeit t einstellen.

Zu einem Zeitpunkt T0 ist die Wandlerüberbrückungskupplung 12 vollständig geöffnet und sowohl der Betätigungsdruck p_WK stromauf der Ventileinrichtung 16 als auch der Betätigungsdruck p_WKS stromab der Ventileinrichtung 16 entsprechen im Wesentlichen dem Vorbefülldruckniveau p_VB. Der Sperrdruck p_sperr weist ein hierzu äquivalentes Druckniveau auf, zu dem die Ventileinrichtung 16 die Wandlerüberbrückungskupplung 12 mit dem Wandlerkupplungsventil 9 verbindet.

Ein durch den Torusinnenraum 19 des Drehmomentwandlers 11 geführter Hydraulikfluidvolumenstrom Q, der eine Funktion des Systemdrucks p_sys ist, weist einen zwischen einem minimalen Wert Q_min und einem maximalen Wert Q_max variierenden Wert auf, der vom aktuell vorliegenden Systemdruck p_sys abhängig ist. Dabei stellt sich der minimale Wert Q_min in nichtgesättigtem Zustand des Primärdruckkreises 3 ein, zu dem der Sekundärdruckkreis 4 nicht mit Hydraulikfluidvolumen beaufschlagt wird. In diesem Betriebszustand des Hydrauliksystems 1 gemäß Fig. 1 bzw. gemäß Fig. 3 wird der Durchfluss des Drehmomentwandlers 11 über die Ventileinrichtung 24 und die Drosseleinrichtung bzw. die Zuführblende 25 ausgehend vom Primärdruckkreis 3 aufrechterhalten. Im Unterschied hierzu stellt sich der maximale Durchflusswert Q_max im Bereich des Torusinnenraums 19 des Drehmomentwandlers 11 bei vollständig gesättigtem Betriebszustand des Primärdruckkreises 3 bei gleichzeitig maximal vorliegendem Systemdruck p_sys ein.

Der jeweils im Torusinnenraum 19 des Drehmomentwandlers 11 sich einstellende Wandlerdruck p_WD variiert zum Zeitpunkt T0 ebenfalls in Abhängigkeit des jeweils vorliegenden Systemdrucks p_sys und des davon abhängigen Schmierdruckes p_S zwischen einem minimalen Wert p_WDmin und einem maximalen Wert p_WDmax, wobei sich der minimale Wert p_WDmin und der maximale Wert p_WDmax und jeweils dazwischen liegende Druckwerte des Wandlerdrucks p_WD wiederum zu den vorbeschriebenen Betriebszuständen des Hydrauliksystems 1 gemäß Fig. 1 bzw. gemäß Fig. 3 einstellen, zu denen der minimale Wandlerdurchfluss Q_min oder der maximale Wandlerdurchfluss oder dazwischen liegende Volumenströme im Torusinnenraum 19 vorliegen. In geöffnetem Zustand der Wandlerüberbrückungskupplung 12 wird der Torusinnenraum 19 des Drehmomentwandlers 11, d. h. vorliegend zum Zeitpunkt TO, über den Sekundärdruckkreis 4 seriell zum Getriebekühler 22 und zur Getriebeschmierung 23 mit Hydraulikfluid durchströmt und gekühlt. Die Durchflussmenge Q und der Wandlerdruck p_WD werden hierbei systemdruckabhängig über das Wandlerdruckventil 5 eingeregelt.

Zu einem Zeitpunkt T1 ergeht eine Anforderung zum Erhöhen der Übertragungsfähigkeit der Wandlerüberbrückungskupplung 12. Um die Wandlerüberbrückungskupplung 12 in gewünschtem Umfang mit Betätigungsdruck p_WK bzw. p_WKS beaufschlagen zu können, wird der Sperrdruck p_sperr bei dem Hydrauliksystem 1 gemäß Fig. 1 in einem über die durchgezogene Linie dargestellten Umfang auf einen Druckwert p_sperr 1 angehoben, zu dem die Ventileinrichtung 16 sicher in sperrendem Betriebszustand gehalten ist. Gleichzeitig werden aufgrund der Anforderung zum Schließen der Wandlerüberbrückungskupplung 12 zum Zeitpunkt T1 der Systemdruck p_sys und der Sperrdruck p_sperr angehoben, um anschließend die Ventileinrichtung 16 der Wandlerüberbrückungskupplung 12 über den Druck p_WK definiert öffnen und die Wandlerüberbrückungskupplung 12 in der nachfolgend näher beschriebenen Art und Weise schnell befüllen zu können.

Zu einem auf den Zeitpunkt T1 folgenden Zeitpunkt T2 wird das Wandlerkupplungsventil 9 ausgehend vom Druckregler 8 mit einem entsprechenden Drucksignal p_8_WK beaufschlagt und ein Schnellbefülldruckniveau p_WKSF des Betätigungsdruckes p_WK an der Ventileinrichtung 16 angelegt. Dies führt dazu, dass die Ventileinrichtung 16 in ihren die Verbindung zwischen dem Wandlerkupplungsventil 9 und der Wandlerüberbrückungskupplung 12 freigebenden Betriebszustand entgegen dem anliegenden Sperrdruck p_sperr übergeht und ein in Fig. 3 näher dargestellter Kolbenraum 38 der Wandlerüberbrückungskupplung 12 mit dem Schnellfülldruck p_WKSF bis zu einem Zeitpunkt T3 mit einem sogenannten Schnellfüllpuls beaufschlagt wird.

Zum Zeitpunkt T3 wird der Betätigungsdruck p_WK und damit auch der Betätigungsdruck p_WKS stromab der Ventileinrichtung 16 auf ein Füllausgleichsniveau p_WKFA abgesenkt und bis zu einem Zeitpunkt T4 auf diesem Niveau belassen. Zum Zeitpunkt T2 führt die Betätigung des Wandlerkupplungsventils 9 durch den Druckregler 8 dazu, dass auch das Wandlerschaltventil 6 vom Drucksignal p_8_WK aus der in Fig. 1 gezeigten Schaltstellung in die in Fig. 2 dargestellte Schaltstellung umgeschoben wird und der Zulauf des Drehmomentwandlers 11 bzw. die Leitung 17 parallel zum Getriebekühler 22 und zur Getriebeschmierung 23 geschaltet wird.

Die Lamellen der Wandlerüberbrückungskupplung 12 sind zum Zeitpunkt T4 vollständig aneinander angelegt. Ausgehend von diesem Betriebszustand der Wandlerüberbrückungskupplung 12 verursacht jede weitere Druckerhöhung des Betätigungsdruckes p_WK bzw. p_WKS einen sofortigen Anstieg der Übertragungsfähigkeit der Wandlerüberbrückungskupplung 12.

Zu einem zwischen den Zeitpunkten T2 und T3 liegenden weiteren Zeitpunkt T5 wird der Sperrdruck p_sperr wieder vom Druckwert p_sperr1 auf das Niveau zum Zeitpunkt T0 abgesenkt, um Verlustleistungen zu reduzieren. Das Absenken des Sperrdruckes p_sperr hat keine Auswirkung auf den Betriebszustand der Ventileinrichtung 16, da diese von dem Betätigungsdruck p_WK bzw. p_WKS und der Federeinrichtung 26 im die Verbindung zwischen dem Wandlerkupplungsventil 9 und der Wandlerüberbrückungskupplung 12 freigebenden Betriebszustand gehalten wird. Zusätzlich wird der Betätigungsdruck p_WK und damit auch der stromab der Ventileinrichtung 16 vorliegende Betätigungsdruck p_WKS ab dem Zeitpunkt T4 über eine Druckrampe auf ein Schließdruckniveau p_WKsch geführt, zu dem die Wandlerüberbrückungskupplung 12 im Wesentlichen vollständig geschlossen ist und ihre volle Übertragungsfähigkeit aufweist. Der Betätigungsdruck p_WK bzw. p_WKS erreicht vorliegend zum Zeitpunkt T6 das Schließdruckniveau p_WKsch und wird anschließend auf diesem Niveau belassen.

Um das Schließdruckniveau p_WKsch im Bereich der Wandlerüberbrückungskupplung 12 im Wesentlichen energieneutral halten zu können, wird zu einem Zeitpunkt T7 der Sperrdruck p_sperr wieder auf einen Druckwert p_sperr 2 angehoben, zu dem die Ventileinrichtung 16 in den die Verbindung zwischen dem Wandlerkupplungsventil 9 und der Wandlerüberbrückungskupplung 12 sperrenden Betriebszustand entgegen der am Ventilschieber 27 anliegenden Betätigungsdrücke p_WK und p_WKS sicher übergeht. Dies führt dazu, dass der stromab der Ventileinrichtung 16 vorliegende Betätigungsdruck p_WKS eingesperrt und die Wandlerüberbrückungskupplung 12 im geschlossenem Betriebszustand in gewünschtem Umfang mit dem zum Halten der Wandlerüberbrückungskupplung 12 erforderlichen Schließdruck p_WKsch ohne Energieaufwand beaufschlagt wird. Anschließend wird der Druck p_WK stromauf der Ventileinrichtung 16 vom Schließdruckniveau p_WKsch auf das Vorbefülldruckniveau p_VB abgesenkt, womit Verlustleistungen, die bei geöffneter Ventileinrichtung 16 zum Aufrechterhalten des Betätigungsdruckes p_WKS erforderlich sind, vermieden werden.

Der durch die vorbeschriebene Schnellbefüllung der Wandlerüberbrückungskupplung 12 ausgelöste erhöhte Hydraulikfluidvolumenbedarf führt in Verbindung mit der Anhebung des Systemdruckes p_sys dazu, dass der Wandlerdurchfluss Q zum Zeitpunkt T2 ausgehend vom Minimalwert Q_min auf das in Fig. 4 dargestellte minimale Durchflussniveau ab dem Zeitpunkt T2 ansteigt oder auf das in Fig. 4 gezeigte maximale Durchflussvolumen ab dem Zeitpunkt T2 absinkt.

Zum Zeitpunkt T3 fällt der Verlauf des minimalen Durchflusses Q_min aufgrund der Absenkung des Betätigungsdruckes p_WK bzw. p_WKS, die mit einer Reduzierung des Systemdrucks p_sys einhergeht, wieder ab, um anschließend ab dem Zeitpunkt T4 leicht ansteigend bis zum Zeitpunkt T6 einen mit dem Schließdruckniveau p_WKsch des Betätigungsdruckes p_WK der Wandlerüberbrückungskupplung 12 korrespondierenden Wert anzunehmen. Zum Zeitpunkt T7 fällt der Verlauf Q_min des minimalen Torusdurchflusses wieder auf das Niveau zum Zeitpunkt T0 ab. Der Verlauf des maximalen Torusdurchflusses des Drehmomentwandlers 11 bleibt ab dem Zeitpunkt T2 im Wesentlichen auf einem konstanten Niveau.

Der Torusdruck p_WD variiert zwischen den Zeitpunkten T0 bis T2 aufgrund des vorbeschriebenen Betriebs des Hydrauliksystems 1 gemäß Fig. 1 bzw. gemäß Fig. 3 und weist ab dem Zeitpunkt T2, zu dem das Wandlerschaltventil 6 in seine zweite Schaltstellung umgeschoben wird und der Wandlerdruck p_WD gleich der Ansprechgrenze des Wandlerkupplungsfußpunktventils 32 ist, einen konstanten Verlauf auf.

Da zum Zeitpunkt T8 der Betätigungsdruck p_WK stromauf der Ventileinrichtung 16 im Wesentlichen das Vorbefülldruckniveau p_VB aufweist, greift am Ventilschieber 27 nur mehr eine reduzierte und in Richtung des freigegebenen Betriebszustandes der Ventileinrichtung 16 angreifende und dem Sperrdruck p_sperr entgegenwirkende Kraftkomponente an, womit der Sperrdruck p_sperr wiederum vom Druckwert p_sperr2 auf das Druckniveau zum Zeitpunkt T0 absenkbar ist, um den Energieaufwand im Betrieb der Getriebevorrichtung 2 reduzieren zu können.

Im Unterschied zu der vorstehenden Beschreibung bezüglich der Druckanhebung und Druckabsenkung des Sperrdruckes p_sperr während der Betätigung des Hydrauliksystems 1 gemäß Fig. 1 besteht bei der Ausführung des Hydrauliksystems 1 gemäß Fig. 3 auf einfache Art und Weise die Möglichkeit, den Sperrdruck p_sperr während der gesamten Betätigung der Wandlerüberbrückungskupplung 12 auf dem Druckniveau zum Zeitpunkt T0 zu belassen, da die Ventileinrichtung 16 in dem für die Betätigung der Wandlerüberbrückungskupplung 12 erforderlichen Umfang alleine über die jeweils anliegenden Betätigungsdrücke p_WK und p_WKS ohne zusätzliche Steuerung und Regelung des Sperrdruckes p_sperr betätigbar ist. Nachdem die Regelphase der Wandlerüberbrückungskupplung 12 zum Zeitpunkt T8 beendet ist, wird das Drucksignal p_8_WK auf ein Druckniveau geführt, zu dem das Wandlerschaltventil 6 sicher in der zweiten Schaltstellung gehalten wird, um im Bereich des Torusinnenraums 19 die vorgenannten konstanten Druckverhältnisse gewährleisten zu können.

Die Kühlung des Drehmomentwandlers 11 ist bei beiden Ausführungen des Hydrauliksystems 1 so ausgelegt, dass bei geöffnetem Betriebszustand der Wandlerüberbrückungskupplung 12 deutlich mehr Hydraulikfluidvolumen durch den Drehmomentwandler 11 fließt als bei geschlossener Wandlerüberbrückungskupplung 12.

Grundsätzlich ist mit beiden Ausführungsformen des Hydrauliksystems der erfindungsgemäßen Getriebevorrichtung gewährleistet, dass über den gesamten Betriebsbereich einer Getriebevorrichtung zumindest ein minimaler Durchfluss des hydrodynamischen Drehmomentwandlers und damit eine entsprechende Wandlerkühlung vorliegt. Dabei werden erhebliche Druckschwankungen im Bereich des Torusinnenraums des hydrodynamischen Drehmomentwandlers bei nichtgeschaltetem Wandlerdruckventil vermieden, um einen Verlust der Übertragungsfähigkeit im Bereich der Wandlerüberbrückungskupplung und eine damit einhergehende Gefahr eines ungewollten Kupplungsschlupfes zu vermeiden.

Zusätzlich ist die erfindungsgemäße Getriebevorrichtung aufgrund der im Vergleich zu aus dem Stand der Technik bekannten Getriebevorrichtungen reduzierten Versorgung des hydrodynamischen Drehmomentwandlers ausgehend vom Primärdruckkreis, über den der hydrodynamische Drehmomentwandler nur bei Unterversorgungsbetriebszuständen des Sekundärdruckkreises versorgt wird, mit höherer Dynamik betreibbar.

### Bezugszeichen

- 1: Hydrauliksystem
- 2: Getriebevorrichtung
- 3: Primärdruckkreis
- 4: Sekundärdruckkreis
- 5: Wandlerdruckventil
- 6: Wandlerschaltventil
- 7: Federeinrichtung
- 8: Druckregler
- 9: Wandlerkupplungsventil
- 10: Federeinrichtung
- 11: Drehmomentwandler
- 12: Wandlerüberbrückungskupplung
- 13: Drehölzuführung
- 14: Ölführkanal
- 15: weiterer Ölführkanal
- 16: Ventileinrichtung
- 17: Leitung
- 18: Drehölzuführung
- 19: Torusinnenraum
- 20: weitere Leitung
- 21: Rückschlagventileinrichtung
- 22: Getriebekühler
- 23: Getriebeschmierung
- 24: Ventileinrichtung
- 25: Drosseleinrichtung
- 26: Federeinrichtung
- 27: Ventilschieber
- 28: Rückschlagventileinrichtung
- 29: Drosseleinrichtung
- 30: Rückschlagventil, Wandlerrückhalteventil
- 31: zusätzliche Leitung
- 32: weitere Rückschlagventileinrichtung
- 33: druckloser Bereich
- 34 bis 37: Druckregler
- 38: Kolbenraum
- p_S: Schmierdruck
- p_sperr: Sperrdruck
- p_sperr1, p_sperr2: diskrete Werte des Sperrdruckes
- p_sys: Systemdruck
- p_VB: Vorbefülldruck
- p_WD: Wandlerdruck
- p_WDmax: maximaler Wandlerdruck
- p_WDmin: minimaler Wandlerdruck
- p_WK: Betätigungsdruck der Wandlerüberbrückungskupplung stromauf der Ventileinrichtung 16
- p_WKFA: Füllausgleichsdruck des Betätigungsdruckes der Wandlerüberbrückungskupplung
- p_WKS: Betätigungsdruck der Wandlerüberbrückungskupplung stromab der Ventileinrichtung 16
- p_WKsch: Schließdruck des Betätigungsdruckes der Wandlerüberbrückungskupplung
- p_WKSF: Schnellfülldruck des Betätigungsdruckes der Wandlerüberbrückungskupplung
- p_8_WK: Drucksignal
- Q: Wandlerdurchfluss
- Q_min: minimaler Wandlerdurchfluss maximaler Wandlerdurchfluss
- T0 bis T8: diskreter Zeitpunkt
- t: Zeit

## Patentansprüche

1. Getriebevorrichtung (2) mit einem Hydrauliksystem (1), das einen Primärdruckkreis (3) und einen Sekundärdruckkreis (4) umfasst, wobei der Sekundärdrucckreis (4) ab einem definierten Sättigungszustand des Primärdruckkreises (3) mit Hydraulikfluid versorgbar ist und ein als Dreileitungswandler ausgeführter hydrodynamischer Drehmomentwandler (11) und eine damit korrespondierende Wandlerüberbrückungskupplung (12) vorgesehen sind, wobei die Wandlerüberbrückungskupplung (12) über den Primärdruckkreis (3) mit einem im Bereich eines Wandlerkupplungsventils (9) einstellbaren Betätigungsdruck (p_WK, p_WKS) betätigbar ist und ein Torusinnenraum (19) des Drehmomentwandlers (11) in geöffnetem Betriebszustand der Wandlerüberbrückungskupplung (12) über ein Wandlerschaltventil (6) des Sekundärdruckkreises (4) mit einem im Bereich eines Wandlerdruckventiles (5) einstellbaren Wandlerdruck (p_WD) beaufschlagbar ist, und wobei der Betätigungsdruck (p_WK, p_WKS) der Wandlerüberbrückungskupplung (12) in Schließrichtung und der Wandlerdruck (p_WD) im Torusinnenraum (19) des Drehmomentwandlers (11) in Öffnungsrichtung der Wandlerüberbrückungskupplung (12) wirkend an der Wandlerüberbrückungskupplung (12) anliegt, **dadurch gekennzeichnet, dass** der Torusinnenraum (19) bei über das Wandlerkupplungsventil (9) mit Betätigungsdruck (p_WK, p_WKS) beaufschlagter Wandlerüberbrückungskupplung (12) über das Wandlerschaltventil (6) ebenfalls mit dem im Bereich des Wandlerdruckventiles (5) einstellbaren Wandlerdruck (p_WD) vom Sekundärdruckkreis (4) und über eine Ventileinrichtung (24) und eine der Ventileinrichtung (24) nachgeschaltete Drosseleinrichtung (25) vom Primärdruckkreis (3) mit Hydraulikfluid versorgbar ist.

2. Getriebevorrichtung nach Anspruch 1, **dadurch gekennzeichnet, dass** in einer ersten Schaltstellung des Wandlerschaltventils (6), die das Wandlerschaltventil (6) in geöffnetem Betriebszustand der Wandlerüberbrückungskupplung (12) aufweist, das Wandlerdruckventil (5) über den Torusinnenraum (19) des Drehmomentwandlers (11) mit einem Getriebekühler (22) und mit einer Getriebeschmierung (23) verbunden ist, wobei ausgangseitig des Torusinnenraumes (19) des Drehmomentwandlers (11) zwischen dem Torusinnenraum (19) und dem Getriebekühler (22) und der Getriebeschmierung (23) eine Rückschlagventileinrichtung (21) vorgesehen ist.

3. Getriebevorrichtung nach Anspruch 2, **dadurch gekennzeichnet, dass** in einer zweiten Schaltstellung des Wandlerschaltventils (6), die das Wandlerschaltventil (6) bei mit Betätigungsdruck (p_WK, p_WKS) beaufschlagter Wandlerüberbrückungskupplung (12) aufweist, das Wandlerdruckventil (5) über das Wandlerschaltventil (6) sowohl mit dem Getriebekühler (22) und der Getriebeschmierung (23) als auch mit einem Eingang des Torusinnenraumes (19) des Drehmomentwandlers (11) verbunden ist, wobei der Torusinnenraum (19) ausgangsseitig über das Wandlerschaltventil (6) und die Rückschlagventileinrichtung (21) mit einem im Wesentlichen drucklosen Bereich (33) in Verbindung steht.

4. Getriebevorrichtung nach Anspruch 2 oder 3, **dadurch gekennzeichnet, dass** die Rückschlagventileinrichtung ein zwischen dem Ausgang des Torusinnenraumes und dem Wandlerschaltventil angeordnetes Rückschlagventil aufweist, dessen Ansprechgrenze variierbar ist.

5. Getriebevorrichtung nach Anspruch 3, **dadurch gekennzeichnet, dass** die Rückschlagventileinrichtung (21) ein zwischen dem Ausgang des Torusinnenraumes (19) und dem Wandlerschaltventil (6) angeordnetes Rückschlagventil (30) und ein zwischen dem Wandlerschaltventil (6) und dem drucklosen Bereich (33) vorgesehenes weiteres Rückschlagventil (32) aufweist, wobei eine Ansprechgrenze des Rückschlagventils (30) kleiner ist als die Ansprechgrenze des weiteren Rückschlagventils (32).

6. Getriebevorrichtung nach Anspruch 3, **dadurch gekennzeichnet, dass** die Rückschlagventileinrichtung (21) ein stromab des Torusinnenraumes (19) und zwischen dem Wandlerschaltventil (6) und dem Getriebekühler (22) und der Getriebeschmierung (23) angeordnetes Rückschlagventil (30) und ein zwischen dem Wandlerschaltventil (6) und dem drucklosen Bereich (33) vorgesehenes weiteres Rückschlagventil (32) aufweist, wobei eine Ansprechgrenze des Rückschlagventils (30) kleiner ist als die Ansprechgrenze des weiteren Rückschlagventils (32).

7. Getriebevorrichtung nach einem der Ansprüche 1 bis 6, **dadurch gekennzeichnet, dass** das Wandlerkupplungsventil (9) und das Wandlerschaltventil (6) über eine Aktoreinrichtung (8) mit einem Vorsteuerdruck (p_8_WK) beaufschlagbar sind.

8. Getriebevorrichtung nach einem der Ansprüche 1 bis 7, **dadurch gekennzeichnet, dass** zwischen dem Wandlerkupplungsventil (9) und der Wandlerüberbrückungskupplung (12) eine Ventileinrichtung (16) vorgesehen ist, mittels der die Verbindung zwischen dem Wandlerkupplungsventil (9) und der Wandlerüberbrückungskupplung (12) sperrbar ist.

9. Getriebevorrichtung nach Anspruch 8, **dadurch gekennzeichnet, dass** an einem Ventilschieber (27) der Ventileinrichtung (16) ein Drucksignal (p_sperr) anlegbar ist, das die Ventileinrichtung (16) in einen die Verbindung zwischen dem Wandlerkupplungsventil (9) und der Wandlerüberbrückungskupplung (12) trennenden oder die Verbindung freigebenden Betriebszustand hält oder überführt.

10. Getriebevorrichtung nach Anspruch 9, **dadurch gekennzeichnet, dass** an dem Ventilschieber (27) der Ventileinrichtung (16) sowohl der im Bereich zwischen dem Wandlerkupplungsventil (9) und der Ventileinrichtung (16) vorliegende und über das Wandlerkupplungsventil (9) einstellbare Hydraulikdruck (p_WK) als auch der im Bereich zwischen der Ventileinrichtung (16) und der Wandlerüberbrückungskupplung (12) vorliegende Hydraulikdruck (p_WKS) jeweils in einer die Verbindung zwischen dem Wandlerkupplungsventil (9) und der Wandlerüberbrückungskupplung (12) trennende oder die Verbindung freigebende Richtung anlegbar ist.

## Claims

1. Transmission apparatus (2) with a hydraulic system (1) which comprises a primary pressure circuit (3) and a secondary pressure circuit (4), it being possible for the secondary pressure circuit (4) to be supplied with hydraulic fluid above a defined saturation state of the primary pressure circuit (3), and a hydrodynamic torque converter (11) which is configured as a three-line converter and a converter lock-up clutch (12) which corresponds with it being provided, it being possible for the converter lock-up clutch (12) to be actuated via the primary pressure circuit (3) with an actuating pressure (p_WK, p_WKS) which can be set in the region of a converter clutch valve (9), and it being possible, in an open operating state of the converter lock-up clutch (12) for a torus interior space (19) of the torque converter (11) to be loaded via a converter switching valve (6) of the secondary pressure circuit (4) with a converter pressure (p_WD) which can be set in the region of a converter pressure valve (5), and the actuating pressure (p_WK, p_WKS) of the converter lock-up clutch (12) prevailing at the converter lock-up clutch (12) so as to act in the closing direction, and the converter pressure (p_WD) in the torus interior space (19) of the torque converter (11) prevailing at the converter lock-up clutch (12) so as to act in the opening direction of the converter lock-up clutch (12), **characterized in that**, in the case of the converter lock-up clutch (12) being loaded with actuating pressure (p_WK, p_WKS) via the converter clutch valve (9), the torus interior space (19) can likewise be supplied by the secondary pressure circuit (4) via the converter switching valve (6) with the converter pressure (p_WD) which can be set in the region of the converter pressure valve (5), and can be supplied by the primary pressure circuit (3) with hydraulic fluid via a valve device (24) and a throttle device (25) which is connected downstream of the valve device (24).

2. Transmission apparatus according to Claim 1, **characterized in that**, in a first switching position of the converter switching valve (6), which first switching position is assumed by the converter switching valve (6) in an open operating state of the converter lock-up clutch (12), the converter pressure valve (5) is connected via the torus interior space (19) of the torque converter (11) to a transmission cooler (22) and to a transmission lubrication means (23), a check valve device (21) being provided on the output side of the torus interior space (19) of the torque converter (11) between the torus interior space (19) and the transmission cooler (22) and the transmission lubrication means (23).

3. Transmission apparatus according to Claim 2, **characterized in that**, in a second switching position of the converter switching valve (6), which second switching position is assumed by the converter switching valve (6) in the case of the converter lock-up clutch (12) being loaded with actuating pressure (p_WK, p_WKS), the converter pressure valve (5) is connected via the converter switching valve (6) both to the transmission cooler (22) and the transmission lubrication means (23) and also to an input of the torus interior chamber (19) of the torque converter (11), the torus interior space (19) being connected on the output side via the converter switching valve (6) and the check valve device (21) to a substantially pressureless region (33).

4. Transmission apparatus according to Claim 2 or 3, **characterized in that** the check valve device has a check valve which is arranged between the output of the torus interior space and the converter switching valve, the response threshold of which check valve can be varied.

5. Transmission apparatus according to Claim 3, **characterized in that** the check valve device (21) has a check valve (30) which is arranged between the output of the torus interior space (19) and the converter switching valve (6), and a further check valve (32) which is provided between the converter switching valve (6) and the pressureless region (33), a response threshold of the check valve (30) being lower than the response threshold of the further check valve (32).

6. Transmission apparatus according to Claim 3, **characterized in that** the check valve device (21) has a check valve (30) which is arranged downstream of the torus interior space (19) and between the converter switching valve (6) and the transmission cooler (22) and the transmission lubrication means (23), and a further check valve (32) which is provided between the converter switching valve (6) and the pressureless region (33), a response threshold of the check valve (30) being lower than the response threshold of the further check valve (32) .

7. Transmission apparatus according to one of Claims 1 to 6, **characterized in that** the converter clutch valve (9) and the converter switching valve (6) can be loaded via an actuator device (8) with a pilot control pressure (p_8_WK).

8. Transmission apparatus according to one of Claims 1 to 7, **characterized in that** a valve device (16) is provided between the converter clutch valve (9) and the converter lock-up clutch (12), by means of which valve device (16) the connection between the converter clutch valve (9) and the converter lock-up clutch (12) can be shut off.

9. Transmission apparatus according to Claim 8, **characterized in that** a pressure signal (p_sperr) can be applied at a valve slide (27) of the valve device (16), which pressure signal (p_sperr) holds or transfers the valve device (16) in/into an operating state which disconnects the connection between the converter clutch valve (9) and the converter lock-up clutch (12) or enables the connection.

10. Transmission apparatus according to Claim 9, **characterized in that** both the hydraulic pressure (p_WK) which prevails in the region between the converter clutch valve (9) and the valve device (16) and can be set via the converter clutch valve (9) and the hydraulic pressure (p_WKS) which prevails in the region between the valve device (16) and the converter lock-up clutch (12) can be applied at the slide valve (27) of the valve device (16) in each case in a direction which disconnects the connection between the converter clutch valve (9) and the converter lock-up clutch (12) or enables the connection.

## Revendications

1. Dispositif de transmission (2) muni d'un système hydraulique (1), comprenant un circuit de pression primaire (3) et un circuit de pression secondaire (4), dans lequel le circuit de pression secondaire (4) peut être alimenté en fluide hydraulique à partir d'un état de saturation défini du circuit de pression primaire (3) et un convertisseur de couple hydrodynamique (11), réalisé sous forme de convertisseur à trois voies, et un embrayage de prise directe (12) correspondant à celui-ci sont prévus, dans lequel l'embrayage de prise directe (12) peut être actionné par l'intermédiaire du circuit de pression primaire (3) avec une pression d'actionnement (p_WK, p_WKS) réglable au niveau d'une vanne d'embrayage de convertisseur (9), et un espace intérieur toroïdal (19) du convertisseur de couple (11), dans un état opérationnel ouvert de l'embrayage de prise directe (12) peut être chargé par l'intermédiaire d'une vanne de commutation de convertisseur (6) du circuit de pression secondaire (4) avec une pression de convertisseur (p_WD) réglable au niveau d'une vanne de pression de convertisseur (5), et dans lequel la pression d'actionnement (p_WK, p_WKS) de l'embrayage de prise directe (12) agissant dans le sens de la fermeture et la pression de convertisseur (p_WD) dans l'espace intérieur toroïdal (19) du convertisseur de couple (11) agissant dans le sens de l'ouverture de l'embrayage de prise directe (12) sont appliquées à l'embrayage de prise directe (12), **caractérisé en ce que**, lorsque l'embrayage de prise directe (12) est chargé avec une pression d'actionnement (p_WK, p_WKS) par l'intermédiaire de la vanne d'embrayage de convertisseur (9), l'espace intérieur toroïdal (19) peut également être alimenté en fluide hydraulique par l'intermédiaire de la vanne de commutation de convertisseur (6) avec la pression de convertisseur (p_WD) réglable au niveau de la vanne de pression de convertisseur (5) depuis le circuit de pression secondaire (4) et par l'intermédiaire d'un dispositif de vanne (24) et d'un dispositif d'étranglement (25) placé en aval du dispositif de vanne (24) depuis le circuit de pression primaire (3).

2. Dispositif de transmission selon la revendication 1, **caractérisé en ce que** dans une première position de commutation de la vanne de commutation de convertisseur (6), que présente la vanne de commutation de convertisseur (6) à l'état opérationnel ouvert de l'embrayage de prise directe (12), la vanne de pression de convertisseur (5) est reliée à un système de refroidissement de transmission (22) et à un système de lubrification de transmission (23) par l'intermédiaire de l'espace intérieur toroïdal (19) du convertisseur de couple (11), dans lequel un dispositif de clapet antiretour (21) est prévu du côté sortie de l'espace intérieur toroïdal (19) du convertisseur de couple (11) entre l'espace intérieur toroïdal (19) et le système de refroidissement de transmission (22) et le système de lubrification de transmission (23).

3. Dispositif de transmission selon la revendication 2, **caractérisé en ce que** dans une deuxième position de commutation de la vanne de commutation de convertisseur (6), que présente la vanne de commutation de convertisseur (6) lorsque l'embrayage de prise directe (12) est chargé avec la pression d'actionnement (p_WK, p_WKS), la vanne de pression de convertisseur (5) est reliée par l'intermédiaire de la vanne de commutation de convertisseur (6) à la fois au système de refroidissement de transmission (22) et au système de lubrification de transmission (23) ainsi qu'à une entrée de l'espace intérieur toroïdal (19) du convertisseur de couple (11), dans lequel l'espace intérieur toroïdal (19) côté sortie est en communication avec une zone substantiellement sans pression (33) par l'intermédiaire de la vanne de commutation de convertisseur (6) et du dispositif de clapet antiretour (21) .

4. Dispositif de transmission selon la revendication 2 ou 3, **caractérisé en ce que** le dispositif de clapet antiretour présente un clapet antiretour disposé entre la sortie de l'espace intérieur toroïdal et la vanne de commutation de convertisseur, dont le seuil de réponse est variable.

5. Dispositif de transmission selon la revendication 3, **caractérisé en ce que** le dispositif de clapet antiretour (21) présente un clapet antiretour (30), disposé entre la sortie de l'espace intérieur toroïdal (19) et la vanne de commutation de convertisseur (6), et un clapet antiretour supplémentaire (32) prévu entre la vanne de commutation de convertisseur (6) et la zone sans pression (33), un seuil de réponse du clapet antiretour (30) étant inférieur au seuil de réponse du clapet antiretour supplémentaire (32).

6. Dispositif de transmission selon la revendication 3, **caractérisé en ce que** le dispositif de clapet antiretour (21) présente un clapet antiretour (30) disposé en aval de l'espace intérieur toroïdal (19) et entre la vanne de commutation de convertisseur (6) et le système de refroidissement de transmission (22) et la système de lubrification de transmission (23), et un clapet antiretour supplémentaire (32) prévu entre la vanne de commutation de convertisseur (6) et la zone sans pression (33), un seuil de réponse du clapet antiretour (30) étant inférieur au seuil de réponse du clapet antiretour supplémentaire (32).

7. Dispositif de transmission selon l'une quelconque des revendications 1 à 6, **caractérisé en ce que** la vanne d'embrayage de convertisseur (9) et la vanne de commutation de convertisseur (6) peuvent être chargées avec une pression de pilotage (p_8_WK) par l'intermédiaire d'un dispositif actionneur (8).

8. Dispositif de transmission selon l'une quelconque des revendications 1 à 7, **caractérisé en ce qu'**entre la vanne d'embrayage de convertisseur (9) et l'embrayage de prise directe (12), un dispositif de vanne (16) est prévu qui permet de bloquer la connexion entre la vanne d'embrayage de convertisseur (9) et l'embrayage de prise directe (12).

9. Dispositif de transmission selon la revendication 8, **caractérisé en ce qu'**un signal de pression (p_sperr) peut être appliqué à un obturateur de vanne (27) du dispositif de vanne (16), ledit signal maintenant ou faisant passer le dispositif de vanne (16) dans un état opérationnel coupant la connexion entre la vanne d'embrayage de convertisseur (9) et l'embrayage de prise directe (12) ou libérant la connexion.

10. Dispositif de transmission selon la revendication 9, **caractérisé en ce qu'**à la fois la pression hydraulique (p_WK) présente dans la zone entre la vanne d'embrayage de convertisseur (9) et le dispositif de vanne (16) et réglable par l'intermédiaire de la vanne d'embrayage de convertisseur (9), et la pression hydraulique (p_WKS) présente dans la zone entre le dispositif de vanne (16) et l'embrayage de prise directe (12) peuvent être appliquées à l'obturateur de vanne (27) du dispositif de vanne (16) respectivement dans une direction coupant la connexion entre la vanne d'embrayage de convertisseur (9) et l'embrayage de prise directe (12) ou libérant la connexion.
